# EUROPEAN PATENT APPLICATION

(11) **EP 3 179 083 A1**
(43) Date of publication of application: **14.06.2017**
(21) Application number: 16201720.6
(22) Date of filing: 01.12.2016
(51) Int. Cl.: F02K 1/00, F02K 1/78, F02K 3/06

(54) **ASYMMETRIC EXHAUST NOZZLE FOR GAS TURBINE ENGINE**

(30) Priority: 10.12.2015 PL 41518415
(71) Applicant: General Electric Company, Schenectady, NY 12345 (US)
(72) Inventor: HOLT, Gavin Joseph, Cincinnati, OH Ohio 45215 (US); IGLEWSKI, Tomasz, Cincinnati, OH Ohio 45215 (US); HOLLAND, John Robert, Cincinnati, OH Ohio 45215 (US)
(74) Representative: Williams, Andrew Richard

(57) **Abstract**

A turbofan exhaust nozzle apparatus includes: an inner shell 30 having a centerline axis, the inner shell 30 disposed inside a surrounding outer shell 32 to define an annular flow duct 34 therebetween terminating in an outlet at a trailing edge 40 of the outer shell 32, the inner shell 30 terminating in a trailing edge aft of the outlet; and a pylon 14 interrupting circumferentially the duct; wherein an aft portion of the outer shell 32 is non-axisymmetric around a common centerline axis of the nozzle, and the trailing edge 40 of the outer shell 32 is vertically non-coplanar.

## Description

### BACKGROUND OF THE INVENTION

The present invention relates generally to gas turbine engines, and more specifically, to exhaust nozzles in turbofan aircraft engines.

In a gas turbine engine, air is pressurized in a compressor and mixed with fuel in a combustor for generating hot combustion gases from which energy is extracted in turbine stages. A high pressure turbine (HPT) follows the combustor and extracts energy from the combustion gases for powering the compressor. A low pressure turbine (LPT) follows the HPT and extracts additional energy from the gases for powering an upstream fan in an exemplary turbofan aircraft engine application.

Modem turbofan aircraft engines have undergone decades of continuing development for maximizing aero dynamic efficiency while minimizing weight thereof, and for also achieving long useful life. Engine efficiency may be simply evaluated by specific fuel consumption (SFC) in which fractionally small improvements thereof are significant in reducing fuel consumption of the engine when powering the aircraft in flight.

The typical turbofan engine includes an annular fan nozzle which discharges the pressurized fan air for producing a majority of the propulsion thrust. A core nozzle follows the fan nozzle and discharges the spent combustion gases which add to the propulsion thrust.

The aerodynamic design of the fan and core nozzles is also subject to continuing development for further increasing aerodynamic efficiency thereof, including corresponding thrust coefficients.

The typical exhaust nozzle is axisymmetrical about the longitudinal or axial centerline axis of the engine for maximizing performance and efficiency under conventional design practices.

However, the aircraft engine must be suitably mounted in the aircraft and this is typically accomplished by a supporting pylon that provides a frame to which the engine is rigidly attached.

The typical wing pylon supports the engine vertically under the aircraft wing with the pylon occupying the twelve o'clock circumferential position of the engine.

The fan nacelle is typically formed in two circumferential halves typically referred to as C-ducts for allowing the nacelle to be opened in clamshell fashion for accessing the core engine during maintenance outages. In this configuration of the turbofan engine, a lower bifurcation or longitudinal beam is located at the bottom or six o'clock position of the engine.

Accordingly, the upper pylon and lower beam typically interrupt the circumferential continuity of the annular fan duct and the fan nozzle. The fan exhaust is therefore discharged from the fan nozzle in two discrete C-duct portions for collectively providing propulsion thrust.

However, the introduction of the upper and lower bifurcations correspondingly affects the circumferential continuity of the velocity and pressure distributions of the pressurized fan air which correspondingly reduces aerodynamic performance and efficiency of the nozzle.

Accordingly, there remains a need for an exhaust nozzle having improved efficiency notwithstanding circumferential interruptions thereof.

### BRIEF DESCRIPTION OF THE INVENTION

This need is addressed by an exhaust nozzle having an inner shell disposed coaxially inside an outer shell to define a flow duct terminating in an outlet at a trailing edge of the outer shell. The outer shell varies circumferentially around the flow duct.

According to one aspect of the technology described herein, a turbofan exhaust nozzle apparatus includes: an inner shell having a centerline axis, the inner shell disposed inside a surrounding outer shell to define an annular flow duct therebetween terminating in an outlet at a trailing edge of the outer shell, the inner shell terminating in a trailing edge aft of the outlet; and a pylon interrupting circumferentially the flow duct; wherein an aft portion of the outer shell is non-axisymmetric around the centerline axis, and the trailing edge of the outer shell is vertically non-coplanar.

According to another aspect of the technology described herein, a turbofan exhaust nozzle apparatus includes: an inner shell having a centerline axis, the inner shell disposed inside a surrounding outer shell to define an annular flow duct therebetween terminating in an outlet at a trailing edge of the outer shell, the inner shell terminating in a trailing edge aft of the outlet; and a pylon interrupting circumferentially the duct; wherein the trailing edge of the outer shell varies in both axial position and local radius about the circumference of the outer shell.

### BRIEF DESCRIPTION OF THE DRAWINGS

The invention may be best understood by reference to the following description taken in conjunction with the accompanying drawing figures in which:
FIG. 1 is a partly sectional schematic side view of an aircraft turbofan gas turbine engine having a pylon for being mounted to the wing of an aircraft;
FIG. 2 is another partly sectional schematic side view of the engine of FIG. 1;
FIG. 3 is a aft-facing-forward elevational view of the fan and core exhaust nozzles illustrated in FIG. 1 and taken along line 3-3;
FIG. 4 is a schematic axial sectional view of the fan and core exhaust nozzles of the engine illustrated in FIG. 3 and taken along line 4-4;
FIG. 5 is a schematic sectional elevational view of an exemplary cross section through the fan nozzle illustrated in FIG. 3 and taken along line 5-5; and
FIG. 6 is a schematic half-sectional view showing three different fan nozzle locations superimposed in one figure.

### DETAILED DESCRIPTION OF THE INVENTION

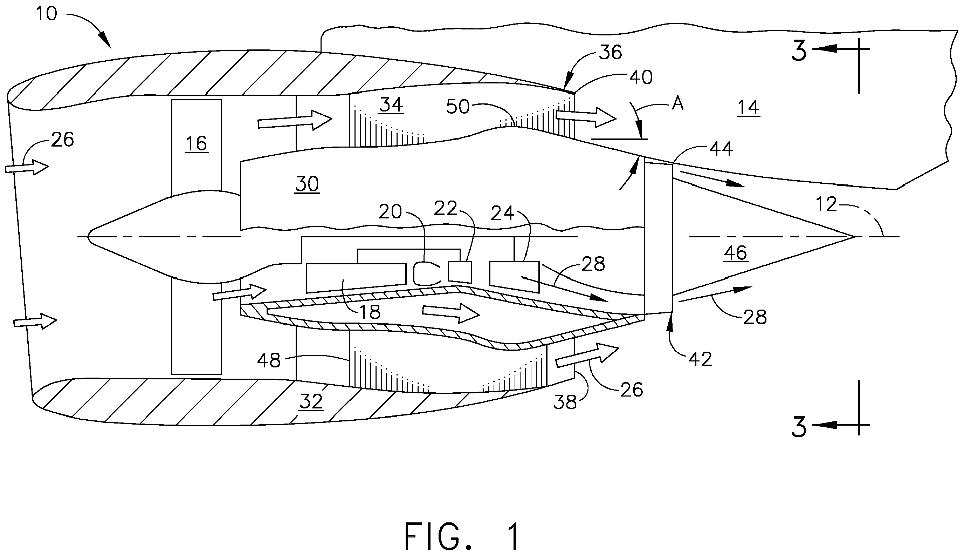

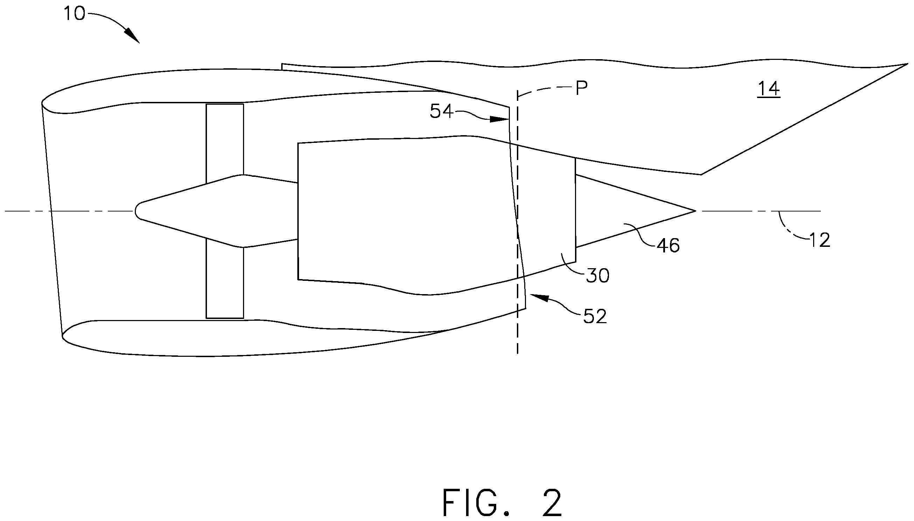

Referring to the drawings wherein identical reference numerals denote the same elements throughout the various views, FIGS. 1 and 2 illustrate schematically a turbofan aircraft gas turbine engine 10 which is generally axisymmetrical about an a longitudinal or axial centerline axis 12. The engine is specifically configured for being suspended vertically by a pylon 14 to the wing of aircraft for powering the aircraft during flight.

The engine includes in serial flow communication a fan 16, compressor 18, combustor 20, high pressure turbine ("HPT") 22, and low pressure turbine ("LPT") 24. The rotors of the HPT 22 are joined by one shaft to the rotors of the compressor 18, and the rotors of the LPT 24 are joined by a second shaft to the rotor supporting the fan blades in the fan 16.

During operation, ambient air 26 enters the inlet of the engine and is pressurized in part by the fan 16, with an inner portion of the pressurized air then being channeled through the compressor 18 which further pressurizes the air which is then mixed with fuel in the combustor 20 for generating hot combustion gases 28. Energy is extracted from the gases in the HPT 22 for powering the compressor, and additional energy is extracted from the gases in the LPT 24 for powering the upstream fan 16.

An annular core cowl or inner shell 30 surrounds the components of the core engine aft of the fan 16 and is spaced radially inwardly from the inner surface of the surrounding fan nacelle or outer shell 32 and defines an annular fan flow duct 34 through which the pressurized fan air bypasses the core engine for producing a majority of the propulsion thrust.

The outer surface of the inner shell 30 provides a radially inner boundary for the fan duct 34, with its radially outer boundary being provided by the inner surface of the surrounding outer shell 32.

The core engine terminates in an annular core exhaust nozzle 42 at the trailing edge 44 of the inner shell 30. An annular centerbody or plug 46 is disposed coaxially inside the core exhaust nozzle 42 and defines the inner flow boundary thereof, with the outer flow boundary being defined the inner surface of the inner shell 30.

The fan duct 34 begins at the forward end of the inner shell 30 behind the fan 16, and terminates in an annular fan exhaust nozzle 36 surrounding the aft end of the inner shell 30. The fan nozzle 36 has an annular outlet 38 at the aft trailing edge 40 of the fan nacelle. During operation, air pressurized by the fan 16 bypasses the core engine through the fan duct 34 and is discharged through the fan nozzle 36 for producing a majority of the propulsion thrust. Correspondingly, the spent combustion gases 28 are discharged from the core engine through the core nozzle 42 aft of the fan nozzle 36 and radially inwardly thereof

However, as described above in the Background section, the pylon 14 includes a portion located at the top of the fan duct 34 which interrupts the circumferential continuity thereof to the outer shell trailing edge 40.

A lower bifurcation or longitudinal beam 48 interrupts the circumferential continuity of the lower portion of the fan duct 34 terminating just short of the outer shell trailing edge 40.

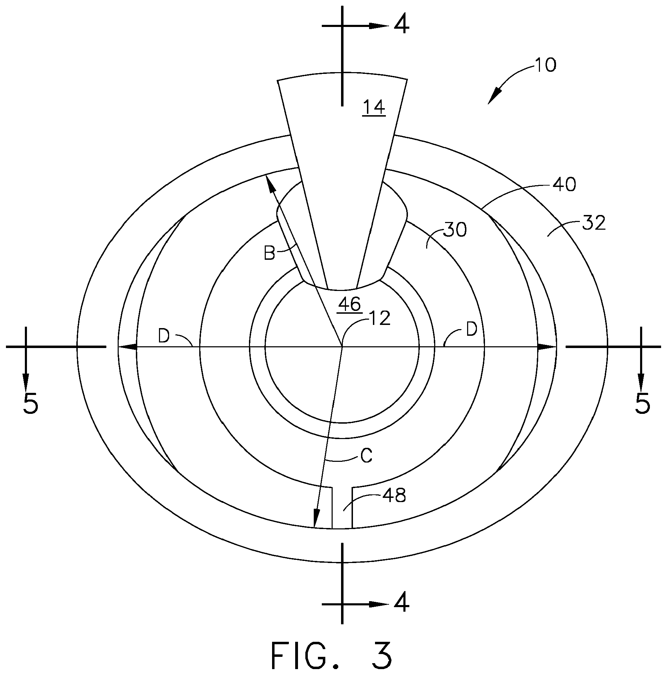

FIG. 3 illustrates the aft end of the engine in vertical elevational view. For reference, the pylon 14 is located at the twelve o'clock position of the engine 10, with the lower beam 48 being located at the diametrically opposite six o'clock position of the engine 10. In this way, the fan duct 34 may be configured in the two C-duct half portions for allowing clamshell opening thereof in a conventional manner.

The pylon 14 and beam 48 therefore block or interrupt the fan duct 34 at the twelve and six o'clock positions, and so bifurcate the otherwise fully annular fan duct 34 into laterally or horizontally opposite C-duct portions which correspondingly affects the velocity and pressure distributions of the pressurized fan air 26 being discharged through the fan duct 34 during operation.

FIGS. 1 and 2 illustrate the typical axial contours or profiles of the inner shell 30 disposed coaxially inside the surrounding outer shell 32. The inner shell 30 begins directly aft of the fan 16 and initially diverges aft in increasing diameter in the axially aft direction to a maximum diameter hump 50 disposed inside the fan duct 34 typically forward of the outlet 38. From the hump 50, the inner shell 30 converges aft in decreasing diameter to the trailing edge 44 of the inner shell 30.

The aft portion of the inner shell 30 between the fan and core nozzles is typically an axially straight cone having a corresponding axial slope or cone angle "A". The inner shell 30 is defined as a surface of revolution around the centerline axis 12, with a constant diameter in each radial plane and with a circular circumference, and the cone angle is constant circumferentially around the perimeter.

Correspondingly, a prior art fan nozzle is also axisymmetrical about the centerline axis 12 of the engine with its trailing edge similarly defining a circular perimeter, with the fan nozzle 36 also being circular with a constant differential radius between the trailing edge of the outer shell 32 and the outer surface of the inner shell 30.

However, as described above, the upper pylon 14 and lower beam 48 illustrated in FIGS. 1 and 2 bifurcate the circumferential continuity of the fan nozzle 36 and correspondingly affect the uniformity of the pressure and velocity distributions of the pressurized air being discharged therefrom. To address this non-uniformity, the aft portion of the outer shell 32 is non-axisymmetric in both axial and circumferential directions.

FIG. 3 illustrates the variation or non-axisymmetric shaping in the circumferential direction. More specifically, the local radius of the trailing edge 40 varies around the circumference of the outer shell 32. The minimum local radius "B" of the trailing edge 40 occurs at the two junctions with the pylon 14, at approximately the eleven o'clock through one o'clock positions, inclusive of the twelve o'clock position. For purposes of description the minimum local radius B can be described as being at the twelve o'clock position of the trailing edge 40 (were it not interrupted by the pylon 14). Conversely, the maximum local radius "D" of the trailing edge 40 occurs at the three o'clock and nine o'clock positions. The local radii D at the three o'clock and nine o'clock positions are equal to each other.

As illustrated, the local radius "C" at the six o'clock position has a dimension intermediate to the local radii B and D at the three/nine o'clock and twelve o'clock positions. The local radii smoothly transition between the different dimensions. Stated another way, the trailing edge 40 can be described as an oval with the center of the oval shifted downward from the centerline axis 12 of the engine 10. This shape may be referred to as "oval" or "ovalized". The outer shell 32 may be described as being laterally symmetric on opposite sides of the pylon 14. Other shapes are possible. For example, the local radius C at the six o'clock position could be less than the local radius B at the twelve o'clock position, but could be less than, equal to, or greater than the local radii D.

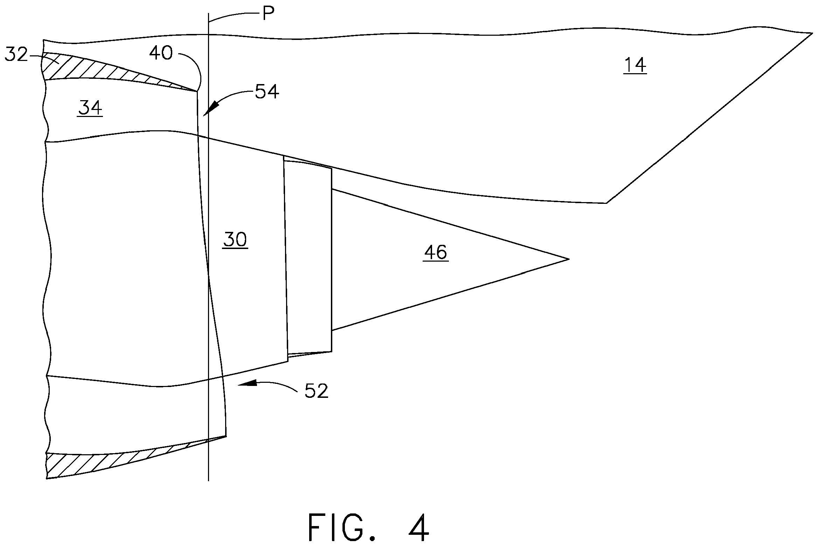

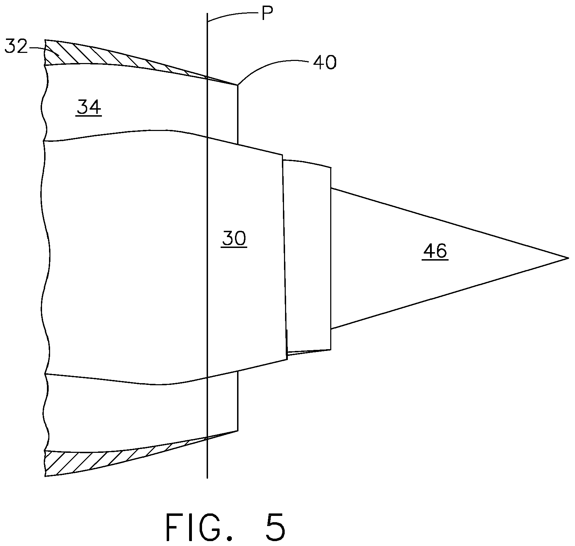

FIGS. 4 and 5 illustrate the variation or non-axisymmetric shaping in the axial direction. At least a portion of the trailing edge 40 deviates from an imaginary vertical plane used for reference, labeled "P". As used herein, the term "vertical plane" refers to a plane which is perpendicular or geometrically normal to the centerline axis 12, regardless of the actual orientation of the plane relative to the Earth or other external frame of reference. For the sake of description, the plane P is shown passing through approximately the three o'clock and nine o'clock positions of the trailing edge 40; accordingly the displacement is shown as being minimal or non-existent at those locations. The axial location of the plane P is arbitrary. The non-axisymmetric shaping of the trailing edge 40 may be referred to generally as a "vertically non-coplanar" fan exhaust nozzle.

A lower portion 52 of the trailing edge 40, from approximately the three o'clock position to the nine o'clock position, inclusive of the six o'clock position, when viewed in rear elevation, is shifted or displaced axially aft from the plane P (and from the remainder of the trailing edge 40). The location of maximum displacement occurs at approximately the six o'clock position. The displacement fades or tapers away at circumferential positions away from the location of maximum displacement.

An upper portion 54 of the trailing edge 40, from approximately the nine o'clock position to the three o'clock position, inclusive of the twelve o'clock position is shifted or displaced axially forward from the plane P (and from the remainder of the trailing edge 40). The location of maximum displacement occurs at approximately the twelve o'clock position. The displacement fades or tapers away at circumferential positions away from the location of maximum displacement. The rate of taper, or taper profile, may be a linear or non-linear function. In the illustrated example, the displacement of the lower portion 52 (and the slope of the angle) is greater than the displacement (and slope of the angle relative to the plane P) of the upper portion 54. When viewed in side elevation, a portion of the trailing edge 40 defines a shallow "S" shape. Other shapes are possible. For example, the trailing edge 40 may incorporate one or more shapes such as crenelations or chevrons.

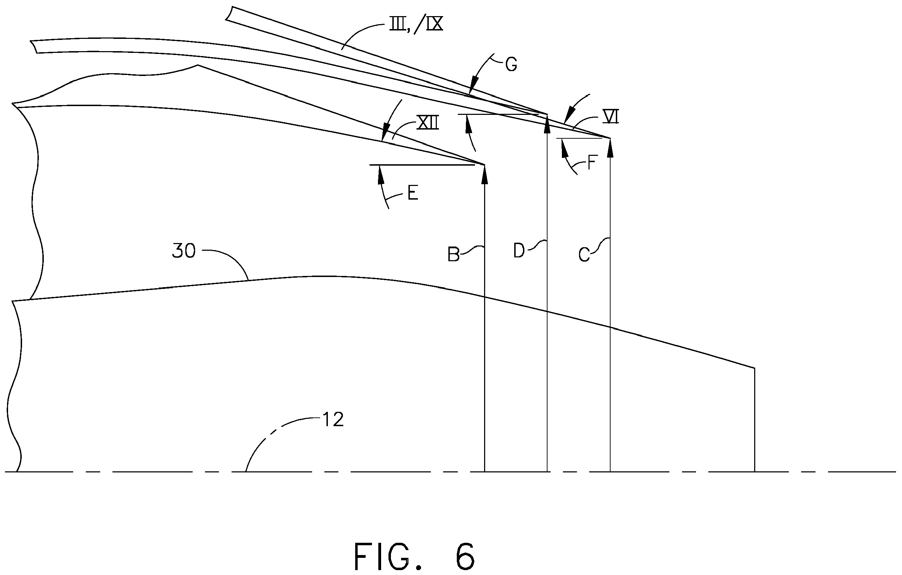

Finally, FIG. 6 shows various half-sections of the fan nozzle 36, labeled III/IX for three o'clock/nine o'clock, VI for six o'clock, and XII for twelve o'clock, respectively, superimposed for comparison purposes. Local radii B, C, and D are marked as well. It can be seen that each location has its own cone angle of the inner surface adjacent the trailing edge 40; these cone angles are labeled "E", "F", and "G" for the twelve o'clock, six o'clock, and three o'clock/nine o'clock locations, respectively. In this configuration, the area ratio (exit area/inlet area) varies at each circumferential location. In the illustrated example the fan nozzle 36 is converging at all locations; however the principles described herein are also applicable to converging/diverging nozzles.

Analysis has shown that the fan nozzle described above, including the vertically non-coplanar feature and the ovalized feature combined, can improve nozzle efficiency and engine SFC as compared to the prior art. In particular, this configuration reduces the total surface area of the pylon 14 which is scrubbed by high-velocity exhaust gases from the fan nozzle 36, and therefore reduces surface friction drag losses. Furthermore, this configuration reduces the strength of the shock structure aft of the nozzle and improves nozzle thrust coefficient and acoustic noise. Installation weight is also reduced by being able to install the engine closer to the wing because the trailing edge 40 at the pylon 14 junction is moved upstream of plane P as well as incorporating reduced radii.

The exact configuration of the fan nozzle 36 may be determined empirically for a specific application, for example using computational fluid dynamics ("CFD") software to model flow through the fan nozzle 36.

The foregoing has described a fan nozzle for a gas turbine engine. All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends any novel one, or any novel combination, of the features disclosed in this specification (including any accompanying claims, abstract and drawings), or to any novel one, or any novel combination, of the steps of any method or process so disclosed.

Various aspects and embodiments of the present invention are defined by the following numbered clauses:
1. A turbofan exhaust nozzle apparatus, comprising:
   an inner shell having a centerline axis, the inner shell disposed inside a surrounding outer shell to define an annular flow duct therebetween terminating in an outlet at a trailing edge of the outer shell, the inner shell terminating in a trailing edge aft of the outlet; and a pylon interrupting circumferentially the flow duct;
   wherein an aft portion of the outer shell is non-axisymmetric around the centerline axis, and the trailing edge of the outer shell is vertically non-coplanar.
2. The apparatus of clause 1, wherein the inner shell is axisymmetric around the centerline axis.
3. The apparatus of clause 1 or 2, wherein the trailing edge of the outer shell has an oval shape.
4. The apparatus of any preceding clause, wherein the outer shell is laterally symmetric on opposite sides of the pylon.
5. The apparatus of any preceding clause, wherein a lower portion of the trailing edge of the outer shell located diametrically opposite the pylon is displaced axially downstream relative to the remainder of the trailing edge of the outer shell.
6. The apparatus of any preceding clause, wherein the displacement tapers away at positions away from the location of maximum displacement.
7. The apparatus of any preceding clause, wherein an upper portion of the trailing edge of the outer shell immediately adjoining the pylon is shifted axially forward relative to the remainder of the trailing edge of the outer shell.
8. The apparatus of any preceding clause, wherein the displacement tapers away at positions away from the location of maximum displacement.
9. The apparatus of any preceding clause, wherein the inner shell diverges aft inside the duct to a hump and then converges aft to the trailing edge thereof.
10. The apparatus of any preceding clause, wherein the axial position of the hump has a varying axial distance from the trailing edge of the outer shell around the circumference of the fan nozzle.
11. The apparatus of any preceding clause, wherein a portion of the trailing edge of the outer shell defines an S-shape.
12. A turbofan exhaust nozzle apparatus comprising:
   an inner shell having a centerline axis, the inner shell disposed inside a surrounding outer shell to define an annular flow duct therebetween terminating in an outlet at a trailing edge of the outer shell, the inner shell terminating in a trailing edge aft of the outlet; and a pylon interrupting circumferentially the duct;
   wherein the trailing edge of the outer shell varies in both axial position and local radius about the circumference of the outer shell.
13. The apparatus of clause 12, wherein the inner shell is axisymmetric around the centerline axis.
14. The apparatus of clause 12 or 13, wherein the trailing edge of the outer shell has an oval shape.
15. The apparatus of any of clauses 12 to 14, wherein the outer shell is laterally symmetric on opposite sides of the pylon.
16. The apparatus of any of clauses 12 to 15, wherein a lower portion of the trailing edge of the outer shell located diametrically opposite the pylon is displaced axially downstream relative to the remainder of the trailing edge of the outer shell.
17. The apparatus of any of clauses 12 to 16, wherein the displacement tapers away at positions away from the location of maximum displacement.
18. The apparatus of any of clauses 12 to 17, wherein an upper portion of the trailing edge of the outer shell immediately adjoining the pylon is shifted axially forward relative to the remainder of the trailing edge of the outer shell.
19. The apparatus of any of clauses 12 to 18, wherein the displacement tapers away at positions away from the location of maximum displacement.
20. The apparatus of any of clauses 12 to 19, wherein a portion of the trailing edge of the outer shell defines an S-shape.

## Claims

1. A turbofan exhaust nozzle apparatus, comprising:
an inner shell (30) having a centerline axis, the inner shell (30) disposed inside a surrounding outer shell (32) to define an annular flow duct (34) therebetween terminating in an outlet at a trailing edge (40) of the outer shell (32), the inner shell (30) terminating in a trailing edge aft of the outlet; and
a pylon (14) interrupting circumferentially the flow duct (34);
wherein an aft portion of the outer shell (32) is non-axisymmetric around the centerline axis, and the trailing edge (40) of the outer shell (32) is vertically non-coplanar.

2. The apparatus of claim 1, wherein the inner shell (30) is axisymmetric around the centerline axis.

3. The apparatus of claim 1 or claim 2, wherein the trailing edge (40) of the outer shell (32) has an oval shape.

4. The apparatus of any preceding claim, wherein the outer shell (32) is laterally symmetric on opposite sides of the pylon (14).

5. The apparatus of any preceding claim, wherein a lower portion of the trailing edge (40) of the outer shell (32) located diametrically opposite the pylon (14) is displaced axially downstream relative to the remainder of the trailing edge (40) of the outer shell (32).

6. The apparatus of any preceding claim, wherein the displacement tapers away at positions away from the location of maximum displacement.

7. The apparatus of any preceding claim, wherein an upper portion of the trailing edge (40) of the outer shell (32) immediately adjoining the pylon (14) is shifted axially forward relative to the remainder of the trailing edge (40) of the outer shell (32).

8. The apparatus of claim 7, wherein the displacement tapers away at positions away from the location of maximum displacement.

9. The apparatus of any preceding claim, wherein the inner shell (30) diverges aft inside the duct to a hump and then converges aft to the trailing edge thereof

10. The apparatus of any preceding claim, wherein a portion of the trailing edge (40) of the outer shell (32) defines an S-shape.

11. A turbofan exhaust nozzle apparatus comprising:
an inner shell (30) having a centerline axis, the inner shell (30) disposed inside a surrounding outer shell (32) to define an annular flow duct (34) therebetween terminating in an outlet at a trailing edge (40) of the outer shell (32), the inner shell (30) terminating in a trailing edge aft of the outlet; and
a pylon (14) interrupting circumferentially the duct (34);
wherein the trailing edge (40) of the outer shell (32) varies in both axial position and local radius about the circumference of the outer shell (32).

12. The apparatus of claim 11, wherein the inner shell (30) is axisymmetric around the centerline axis.

13. The apparatus of claim 11 or 12, wherein the trailing edge (40) of the outer shell (32) has an oval shape.

14. The apparatus of any of claims 11 to 13, wherein the outer shell (32) is laterally symmetric on opposite sides of the pylon (14).

15. The apparatus of any of claims 11 to 14, wherein a lower portion of the trailing edge (40) of the outer shell (32) located diametrically opposite the pylon (14) is displaced axially downstream relative to the remainder of the trailing edge (40) of the outer shell (32).
